Europäisches Patentamt

European Patent Office

Office européen des brevets

(11) Publication number: **0 359 235**
**A2**

# EUROPEAN PATENT APPLICATION

(21) Application number: 89116958.3

(51) Int. Cl.5: **G06F 12/06**

(22) Date of filing: **13.09.89**

(30) Priority: **13.09.88 JP 229017/88**

(43) Date of publication of application:
**21.03.90 Bulletin 90/12**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Nakamura, Nobutaka c/o Intellectual**
**Property Div.**
**Kabushiki Kaisha Toshiba 1-1 Shibaura**
**1-chome**
**Minato-Ku Tokyo 105(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **Computer system capable of effectively utilizing address space.**

(57) A computer system includes a plurality of memories (20, 42, 44, 46, 54); a RAM (100) having a memory capacity corresponding to a memory address space; a memory map designation section (11, 106) for designating areas respectively assigned to the plurality of memories (20, 42, 44, 46, 54) on the memory address space; an access control section (211, 221) for controlling accesses to the plurality of memories (20, 42, 44, 46, 54) and the RAM (100) according to input access control data; and a memory map setting section (11, 108) for generating and supplying to the access control section (211, 221) the access control data for partially disabling the access to the RAM (100) according to the assigned area.

F I G. 2

## Computer system capable of effectively utilizing address space

This invention relates to a computer system and a method for assigning the address area of a memory to a memory address space in a programmable fashion.

Recently, with the development of semiconductor technology, the costs of microprocessors, memories and peripheral control LSIs have become extremely lowered. Computer systems of a relatively high performance can be constructed by adequately combining the ICs via system buses. As it has been strongly demanded to enhance the operation rate of such computer systems, the operation rate of the microprocessor which is the nucleus of the computer system is made even higher and the function thereof tends to be further enhanced. The high operation rate of the computer system can be attained by effecting the processes of the microprocessor in a pipeline fashion, using a cache memory, a write buffer, or the like as well as by enhancing the operation rate of the microprocessor itself.

The computer system is required to maintain software compatibility with the conventional computer system. That is, when a high rate computer system is newly developed, it is required to support not only hardware devices and application softwares which have been developed for computer systems of the same level but also hardware option cards and application softwares which have been designed to function on the conventional personal computers whose operation speed is relatively low. For this reason, it may be sometimes necessary to assign the address areas of each memory to the memory address space in the same manner as in the case of the conventional computer system.

However, in the prior art, the memory address space cannot be freely altered, and the newly developed computer systems cannot always maintain the compatibility. When much stress is put on the compatibility, some functions of the newly developed computer systems must be sacrificed.

Further, with the development of the semiconductor technology, read only memories (ROMs) or ROM chips having a large memory capacity of 1 Mbit or more have been manufactured and put on the market. In this case, however, programs set into the ROM do not always use all the ROM capacity. In general, there remains a relatively large area left unused. In the computer system, in order to maintain the compatibility with the conventional system, the ROM address area available in the memory address space is limited. Therefore, when a large memory capacity ROM chip is used, the memory address space is uselessly occupied by the remaining area and thus the memory address space cannot be effectively used.

This invention has been made in view of the above fact, and an object of this invention is to provide a computer system and a method in which the memory address area can be assigned to the memory address space in a programmable fashion, thereby making it possible to maintain the software compatibility with the conventional computer system and prevent the memory address space from being uselessly occupied by the remaining area of the ROM so that the memory address space can be effectively used.

In order to attain the above object, a computer system includes a plurality of memories; a RAM having a memory capacity corresponding to a memory address space; a memory map designating section for selectively designating areas respectively assigned to the plurality of memories on the memory address space; an access control section for controlling the access to the plurality of memories and the RAM according to input access control data; and a memory map setting section for generating access control data for partially disabling the access to the RAM according to the assigned area and supplying the same to the access control section.

In order to attain the above object, a method for designating a memory map according to a program in a computer system includes the steps of:

selectively designating areas respectively assigned to the plurality of memories on the memory address space;

generating access control data for partially disabling the access to a first RAM according to the assigned area, the memory capacity of the RAM corresponding to the size of the first RAM; and

controlling the access to the plurality of memories and the RAM according to access control data.

As described above, according to this invention, the address area of the memory can be assigned to the memory address space in a programmable fashion, thereby maintaining the software compatibility with the conventional computer system. Further, the memory address space will not be uselessly occupied by the remaining area of the ROM by effecting the copying process, thus making it possible to effectively using the memory address space.

This invention can be more fully understood from the following detailed description when taken in conjunction with the accompanying drawings, in which:

Fig. 1 is block diagram showing the schematic construction of a computer system to which this invention is applied;

Fig. 2 is a block diagram showing the construction of a computer system according to a first embodiment of this invention;

Fig. 3 is a flowchart for illustrating the operation of the first embodiment; and

Figs. 4A to C are diagrams showing the memory address spaces for explaining the operation of the first embodiment of this invention.

There will now be described a computer system according to an embodiment of this invention with reference to the accompanying drawings.

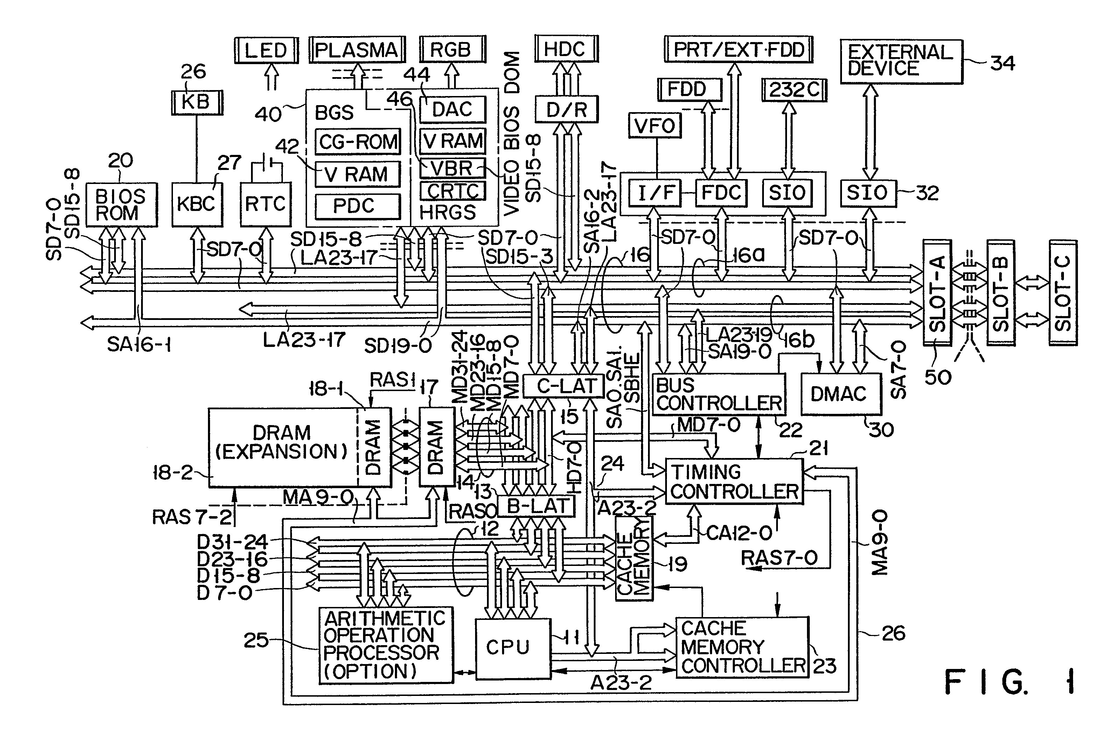

First, the schematic construction of the computer system of this invention is explained with reference to Fig. 1.

In Fig. 1, a 32-bit CPU 11 is connected to a CPU bus including a CPU data bus (D31-0) 12 and a CPU address bus (A23-2) 24. The CPU 11 supplies an address to the CPU address bus 24, supplies data to the CPU data bus 12 and receives data from the CPU data bus 12. An optional arithmetic operation processor 25 is connected to the CPU data bus 12 and effects the arithmetic operation according to the instruction from the CPU 11. A B latch (B-LAT) 13 functions to connect the CPU data bus 12 to a memory data bus (MD31-0) 14 according to a control signal from the timing controller 21. The CPU data bus 12 and the CPU address bus 24 are respectively connected to a cache memory 19 and a cache memory controller 23. Data is read out from the cache memory 19 without accessing memories (DRAM) 17, 18-1 and 18-2 when a cache hit has occurred.

The memory sections (DRAM) 17, 18-1 and 18-2 are connected to the memory data bus 14 and a memory address bus (MA9-0) 26. Further, control signals RAS0 to RAS7 are supplied to the memory sections 17, 18-1 and 18-2. Each of the memory sections 17 and 18-1 has a memory capacity of 1 MB and is provided as a standard memory. The memory section 18-2 is an expansion memory and can be used as expandable memory sections of the maximum memory capacity of 12 MB. The expandable memory sections are specified in the unit of 1 MB by the signals RAS2-7 and the address thereof is designated by column and row addresses of 10 bits supplied from the timing controller 21 via the memory address bus 26. The latch (C-LAT) 15 connects the memory data bus 14 and CPU address bus 24 to a system data bus 16a and a system address bus 16b of the system bus 16 respectively in response to the timing control signal from the bus controller 22.

The timing controller 21 is connected to the CPU address bus 24, the memory address bus 26, a part of the memory data bus 24, the system address bus 16b and cache address bus (CA12-0) and generates various timing control signals to control the operation of the computer system. More specifically, the timing controller 21 generates the timing control signal for controlling the B-LAT 13 in response to control data output from the CPU 11 onto a CPU control data bus (not shown) and a transfer control signal from the bus controller 22. Further, the timing controller 21 generates a memory address and a cache memory address. The cache memory address is supplied to the cache memory 19. A bus controller 22 connected to the system bus 16 is used to perform the control on the operation on the system bus 16. More specifically, the bus controller 22 generates the timing control signal for controlling the C-LAT 15 in response to control data on a system control data bus (not shown) of the system bus 16 and a transfer control signal from the timing controller 21.

A BIOS ROM 20 stores a program for controlling the data input/output operation, i.e., a basic input/output system program. An external device 34 is connected to the system bus 16 via a serial input/output interface 32. Commands and data are supplied from a keyboard (KB) 28 to the CPU 11 via a keyboard controller (KBC) 27.

A high resolution graphic subsystem (HRGS) 40 connected to the system bus 16 includes a VRAM 42 of 32 KB for a monocolor display, a VRAM 44 of 256 KB for a color display, and a video BIOS ROM 46 for storing a program necessary for displaying input data and controlling the display operation. An option slot 50 for receiving a option board 52 which will be described later is connected to the system bus 16. The option board 52 includes an option ROM 54.

In addition, various interfaces are connected to the system bus 16, but the explanation of those portions which do not relate to this invention is omitted.

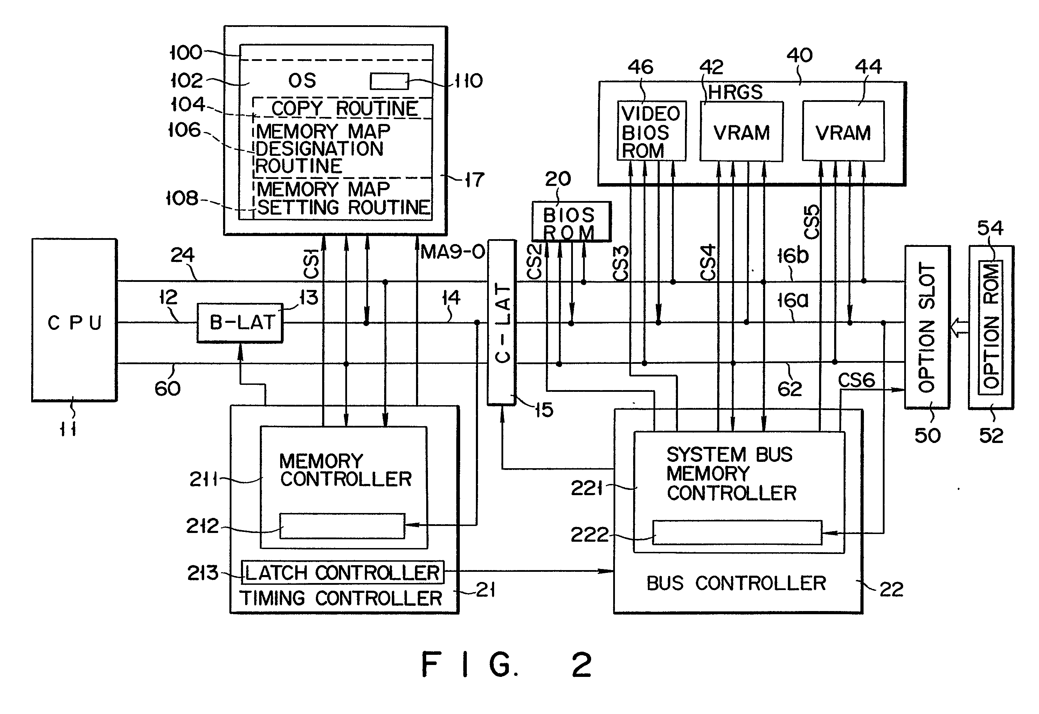

Now, that portion of the construction of the computer system which closely relates to the embodiment of this invention is described in detail with reference to Fig. 2.

In Fig. 2, a memory area 100 of the memory section 17 stores an operating system (OS) 102 including a table 110 for storing memory map information, a copy routine 104, a memory map designation routine 106 and a memory map setting routine 108. The OS 102 also includes a system parameter area for holding system parameters. The OS 102 is automatically loaded on a fixed area of the memory area 100 when the power source of the computer system is turned on. The memory map information includes area data indicating an area to be designated on the memory address space and copy designation data for designating whether the copy process is effected or not. The area data includes size data and area starting data for indicating the starting address of the area in the memory address space.

The CPU 11 is connected to the CPU address bus 24, the CPU data bus 12 and the CPU control data bus 60. The CPU 11 executes the memory map designation routine 106 at the time of setting up the system and executes the copy routine 104 and memory map setting routine 108 at the time of normally starting up the system. When a command included in an application program (not shown) stored in the memory section 17 is executed, an address is output to the CPU address bus 24 and at the same time a memory write signal MW, memory read signal MR, I/O write signal IOW, I/O read signal IOR and the like are output to the CPU control bus 60. Further, latch timing control data is output to a latch controller 213 of the timing controller 21.

The B-LAT 13 latches data on the CPU data bus 12 or the memory data bus 14 in response to the control signal from the timing controller 21 and outputs the same to the memory data bus 14 or the CPU data bus 12. The timing controller 21 is connected to the CPU address bus 24, the memory data bus 14 and the CPU control data bus 60 and controls the B-LAT 13 according to the machine cycle, a signal on the CPU control data bus 60 and a signal from the cache memory controller 23. Further, column and row addresses are output to the memory address bus (MA9-0) 26 according to an address on the CPU address bus 24 and a signal on the CPU control data bus 60. Also, a timing control signal is output to the bus controller 22 according to latch timing control data supplied from the CPU 11 and set into the latch controller 213. The timing controller 21 includes a memory controller 211 having a register group 212 and a latch controller 213. The register group stores area data and disable data (read disable data and/or write disable data) according to memory map information. The memory controller 211 inhibits the output of a chip select signal CSI according to the disable data (the read disable data and/or the write disable data) if an address on the CPU address bus 24 is an address lying in the area designated by area data of the memory address space and when a signal on the CPU control data bus 60 is a memory write signal MW or memory read signal MR. In a case where the address is an address outside the designated area, the signal CS1 is output to the memory section 17.

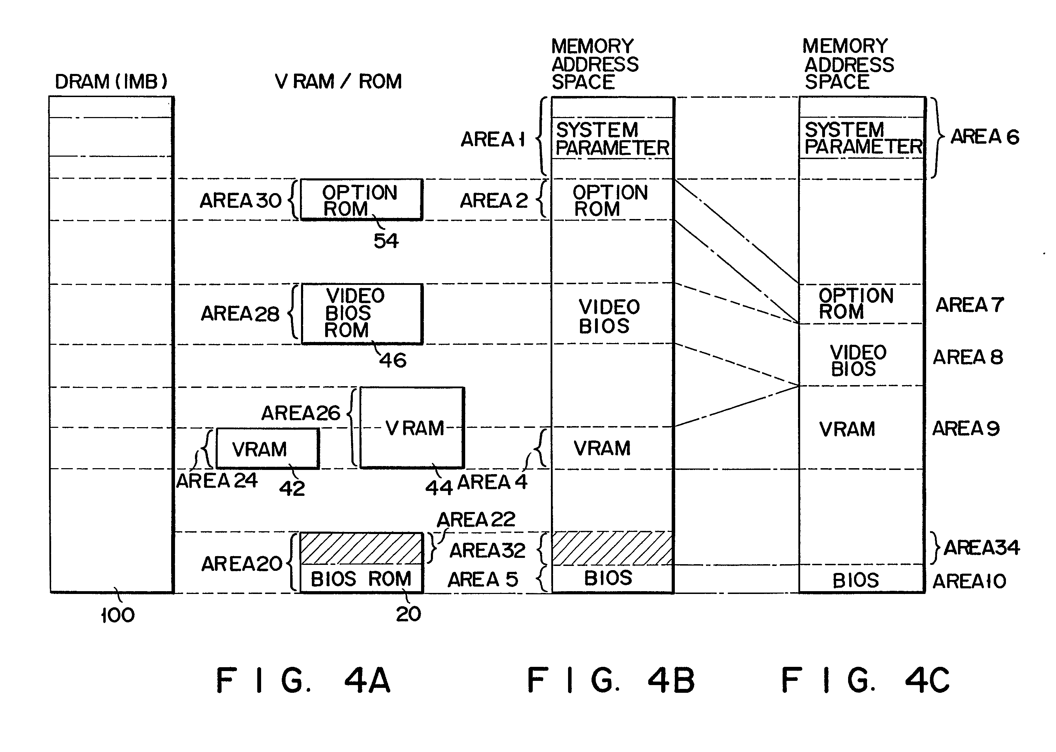

The memory area 100 of the memory section 17 is accessed according to an address on the CPU address bus 24, a signal MW or MR on the CPU control data bus 60 and a signal CS1. The BIOS ROM 20 is connected to the system data bus 16a, the system address bus 16b and the system control data bus 62, and accessed according to the address on the system address bus 16b, the signal MW or MR on the system control data bus 62 and a signal CS2. The ROM 20 includes a remaining area AREA 22 (see Fig. 4A) in which no program is written. The high resolution graphic sub-system (HRGS) 40 includes a video BIOS ROM 46 and VRAMs 42 and 44. The ROM 46 and VRAMs 42 and 44 are each accessed according to the address on the system address bus 16b, the signal MW or MR on the system control data bus 62 and a signal CS3, CS4 or CS5. The option board 52 having the option ROM 54 is inserted into the option slot 50 connected to the system bus 16.

The C-LAT 15 latches a signal or data on the CPU address bus 24, the memory data bus 14 and the CPU control data bus 60, or the system data bus 16a, the system address bus 16b and the system control data bus 62 in response to a control signal from the bus controller 22 and outputs the latched signal or data to the system data bus 16a, the system address bus 16b and the system control data bus 62, or the CPU address bus 24, the memory data bus 14 and the CPU control data bus 60. The bus controller 22 is connected to the system data bus 16a, the system address bus 16b and the system control data bus 62 and controls the C-LAT 15 according to a timing control signal from the timing controller 21. The bus controller 22 includes a system bus memory controller 221 having a register group 222. The register group 222 stores the area data and the disable data according to the memory map information. The system bus memory controller 221 inhibits the output of an chip select signal CS2, CS3, CS4, CS5 or CS6 according to the disable data when an address on the system address bus 16b is an address lying in that area of the memory address space which is designated by the area data and when a signal on the system control data bus 62 is a memory write signal MW or the memory read signal MR. In a case where the address is an address outside the designated area, the signal CS2, CS3, CS4, CS5 or CS6 is output to the ROM 20 or 46, VRAM 42 or 44, or option ROM 54.

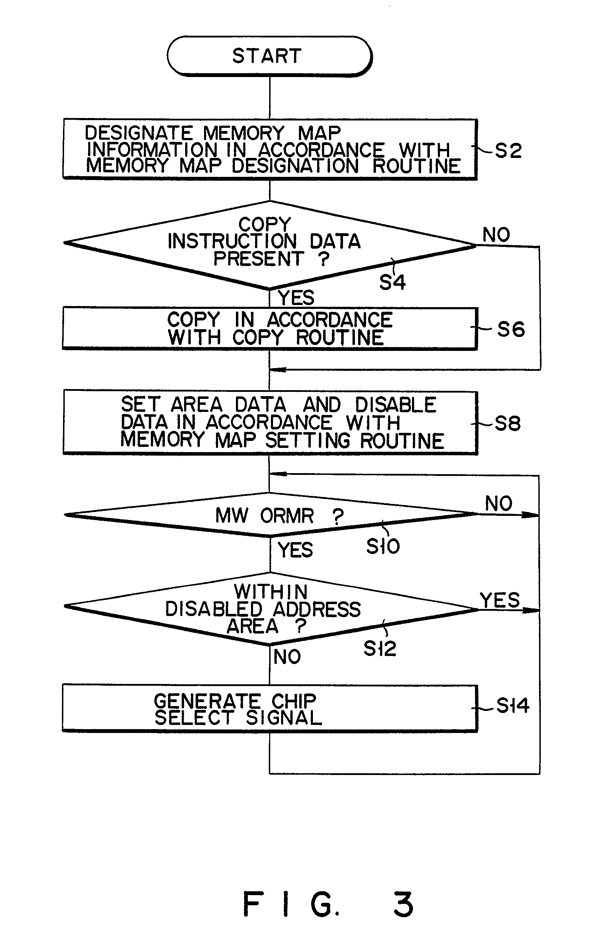

Next, the operation of the embodiment is explained with reference to Figs. 3 and 4A to C. Assume now that a memory address space of 1 MB which is a memory capacity of the memory area 100 of the memory section 17 can be designated. In this case, steps S10 to S14 in the flowchart shown in Fig. 3 correspond to the controllers 211 and 221. In Figs. 4B and C, areas AREA1 and AREA6 are fixed areas and an operating system (OS) 102 is loaded therein. Areas AREA20, AREA24, AREA 26, AREA28 and AREA30 are fixedly assigned.

In order to assign an memory areas of each memory to the memory address space upon setting up the computer system in the step S2, CPU 11 executes the memory map designation routine 106 of the OS 102 stored in the memory area 100. The memory address space designated by the default values at this time is shown in Fig. 4A. In Fig. 4A, the memory areas of the VRAMs 42 and 44 are partly overlapped with each other. Assume now that the VRAM 42 is designated (the VRAM 44 is disabled) and the default values for the other memories are not changed. The memory map information thus determined is written into the table 110.

Next, in the step S4, the copy routine 104 is executed, the memory map information is read out from the table 110 and whether or not a copy instruction is to be generated is determined based on the copy designation data in the memory map information. When no copy process instruction is generated, the step S8 is effected.

In the step S8, the memory map setting routine 106 is executed and the memory map information is read out from the table 110 again. At this time, the disable data (the write disable data and the read disable data) and the area data indicating the areas AREA20, AREA24, AREA28 and AREA30 are produced and set into the register group 212 of the timing controller 21. Further, the disable data and the area data indicating the area AREA26 are produced and set into the register group 222 of the bus controller 22. At this time, the system parameter is updated according to the memory map information.

Thereafter, the execution of the application program is waited in the step S10. Assume that a memory access command is executed in the application program and the CPU 11 generates an address and a control data signal MR. The address and the signal MR are output to the CPU address bus 24 and the CPU control data bus 60, respectively. If the address obtained at this time is an address lying inside the area AREA20, the memory controller 21 determines "YES" in the step S10 and subsequently the step S12 is effected to check whether or not the address lies inside one of the areas AREA20, AREA24, AREA28 and AREA30. In this case, since in the step S12 it is determined to be "YES", a chip select signal CS1 for the memory area 100 is not generated and the process is returned to the step S10. On the other hand, since there is no disabled address area in the system bus memory controller 221, a signal CS2 is generated according to the address and the signal MR supplied from the CPU 11 to the system bus 16 via the C-LAT 15 and the BIOS ROM 20 is accessed.

When the address generated from the CPU 11 is an address outside the areas AREA20, AREA24, AREA28 and AREA30, in the step S12 it is determined to be "NO" and the memory area 100 is accessed.

In this example, the memory map of the memory address space is constructed as shown in Fig. 4B, and accesses to those areas of the memory section 17 which correspond to the areas AREA2, AREA3, AREA4, AREA5 and AREA32 are inhibited. In the above areas, corresponding memories are accessed by the system bus memory controller 221. In this case, the area AREA32 of the BIOS ROM 20 is an area in which no program is written but which cannot be used.

Next, the operation upon execution of an instruction for copying the content of the ROM into the memory area of the memory section 17 will be explained with reference to Fig. 4C.

When the computer system is set up in the step S2, the memory map designation routine 106 of the OS 102 stored in the memory area 100 is executed by the CPU 11 in order to assign the address area to the memory address space. At this time, assume that the copy designation data is input to copy the contents of the BIOS ROM 20, video BIOS ROM 46 and option ROM 54 to the address areas AREA 10, AREA8 and ARE7 different from the address areas AREA 20, AREA28 and ARE30 which are assigned to the ROMs 20, 46 and 54, are designated. Further, assume that the VRAM 44 is designated (the VRAM 42 is disabled). The memory map information thus input by an operator is written into the table 110.

Thereafter, the copy routine 104 is executed in the step S4, and the memory map information is read out from the table 110 to check whether or not the the copy instruction is to be generated based on the copy designation data of the memory map information. In this example, when the copy instruction is generated, the step S6 is effected and latch control data is output from the CPU 11 to the latch controller 213 of the timing controller 21. Further, in order to inhibit the read operation with respect to the areas AREA20, AREA28 and AREA30 of the memory area 100, the area data and the read disable data are set into the register group 212. Then, the contents of the ROM 20, 46 and 54 are sequentially read out by the CPU 11. At this time, since the read operation of the memory area 100 is inhibited, no data will be read out from the memory area 100. The contents read out from the ROMs are written into the designated areas AREA10, AREA8 and AREA7. When all the contents are copied, the area data and the read disable data are reset.

In the step S8, the memory map setting routine 106 is executed and the memory map information is read out from the table 110. At this time, the read disable data and the area data indicating the areas AREA20, AREA28 and AREA30 are produced and set in the register group 222 of the bus controller 22. Further, the area data indicating the area AREA9 and the read disable data and write disable data are produced and set into the register group 212. Also, the system parameter is updated according to the memory map information.

Thereafter, the execution of the application program is waited in the step S10. When a command for accessing the video BIOS is executed in the application program, the system parameter is referred to and an address in the area AREA8 is determined. At this time, assume that the CPU 11 has generated the address and a control data signal MR. The address and the signal MR are supplied to the CPU address bus 24 and the CPU control data bus 60. As a result, "YES" is obtained in the step S10 and then the step S12 is effected. In the step S12, since the address lies in the area AREA8, the chip select signal CS1 for the memory area 100 is generated, thereby permitting a word to be read out from the area AREA8. Then, the process is returned to the step S10. On the other hand, since the read operation for the areas AREA20, AREA28 and AREA30 is inhibited and the VRAM 42 is disabled, none of the signals CS2, CS3, CS4 and CS6 will be generated from the system bus memory controller 221. In contrast, in a case where the address output from the CPU 11 lies in the area AREA9, the access operation with respect to the memory area 100 is inhibited and the VRAM 44 is accessed.

In this example, the memory map of the memory address space is constructed as shown in Fig. 4C and access to the memory area 100 of the memory section 17 is inhibited in the area AREA9. In this case, since the read operation or write operation is permitted with respect to the area AREA34 of the BIOS ROM 20 in which no program is written, the memory area thereof can be effectively used. In addition, when the system bus memory controller has a comparator for holding a start address of a location in the memory map newly assigned to the VRAM and size data of the memory area of the VRAM and generating the chip select signal by comparing an access address with the start address and the size data, the memory area of the VRAM can be relocated.

Reference signs in the claims are intended for better understanding and shall not limit the scope.

## Claims

1. A computer system characterized by comprising:
a plurality of memory means (20, 42, 44, 46, 54);
first RAM means (100) having a memory capacity corresponding to a memory address space;
memory map designation means (11, 106) for selectively designating areas of the memory address space to which said plurality of memory means (20, 42, 44, 46, 54) are respectively assigned;
access control means (211, 221) for controlling access to said plurality of memory means (20, 42, 44, 46, 54) and said first RAM means (100) in accordance with input access control data; and
memory map setting means (11, 108) for generating and supplying to said access control means (211, 221) the access control data for partially disabling the access to said first RAM means (100) in accordance with the assigned areas.

2. A system according to claim 1, characterized in that
said memory map designation means (11, 106) comprises:
second RAM means (106) for storing a first program for designating the areas respectively assigned for said plurality of memory means (20, 42, 44, 46, 54); and
processor means (11) for executing the first program.

3. A system according to claim 2, characterized in that said second RAM means (106) is part of said first RAM means (100) and the first program is part of an operating system.

4. A system according to claim 1, characterized in that said memory map setting means (11, 108) comprises:
third RAM means (108) for storing a second program for partially disabling access to said first RAM means (100) in accordance with the assigned areas; and
processor means (11) for executing the second program.

5. A system according to claim 4, characterized in that said third RAM means (108) is part of said first RAM means (100) and the second program is part of an operating system.

6. A system according to claim 5, characterized in that said plurality of memory means (20, 42, 44, 46, 54) include at least one ROM (20),
said memory map designation means (11, 106) includes copy specifying means (11, 106) for specifying a copy process of copying the contents of said at least one ROM (20) into that area of said first RAM means (100) which is assigned to said at least one ROM (20),
said memory map setting means (11, 108) further comprises means (11, 108) for generating the access control data for disabling access to said at least one ROM (20), and
characterized by further comprising copying means (11, 104) for copying the contents of said at least one ROM (20) into that area of said first RAM means (100) which is assigned to said at least one ROM (20) when the copy process is specified by said copy specifying means (11, 106).

7. A system according to claim 6, characterized in that said copying means (11, 106) comprises:

fourth RAM means (104) for storing a third program for copying the contents of said at least one ROM (20) into that area of said first RAM means (100) which is assigned to said at least one ROM (20) when the copy process is specified by said copy specifying means (11, 106); and

processor means (11) for executing the third program.

8. A system according to claim 7, characterized in that said fourth RAM means (104) is part of said first RAM means (100) and the third program is part of an operating system.

9. A system according to claim 6, characterized in that said memory map designation means (11, 106) includes means (11, 106) for variably designating a size of the area on the memory address space assigned to said at least one ROM (20) irrespective of the size of the area fixedly assigned to said at least one ROM (20).

10. A system according to claim 6, characterized in that said copy means (11, 104) comprises means (11, 104) for disabling a read access to that area of said first RAM means (100) which is fixedly assigned to said at least one ROM (20).

11. In the computer system a method for progranmably designating a memory map characterized by comprising the steps of:

selectively designating areas respectively assigned to a plurality of memories on the memory address space;

generating access control data for partially disabling an access to a first RAM in accordance with the assigned areas, the memory capacity of the first RAM corresponding to a size of the memory address space; and

controlling the access to each of said plurality of memories and said first RAM in accordance with to the access control data.

12. A method according to claim 11, characterized in that said designating step comprises a step of executing a first program to designate the areas respectively assigned to said plurality of memories.

13. A method according to claim 12, characterized in that said first program is part of an operating system.

14. A method according to claim 11, characterized in that said generating step comprises a step of executing a second program to partially disable access to said first memory in accordance with the assigned areas.

15. A method according to claim 14, characterized in that said second program is part of an operating system.

16. A method according to claim 11, characterized in that said plurality of memories include at least one ROM,

said designating step includes a step of generating copy specifying data for specifying the copy process of copying a content of said at least one ROM into that area of said first RAM which is assigned to said at least one ROM,

said access control data setting step further comprises a step of generating the access control data for disabling access to said at least one ROM, and characterized by further comprising a step of copying the content of said at least one ROM into the assigned area of said first RAM in response to the copy specifying data.

17. A method according to claim 16, characterized in that said copying step comprises a step of executing a third program for copying the content of said at least one ROM into the assigned area of said first RAM in response to the copy specifying data.

18. A method according to claim 17, characterized in that said third program is part of an operating system.

19. A method according to claim 16, characterized in that said designation step includes a step of variably designating a size of the area on the memory address space assigned to said at least one ROM irrespective of the size of the area fixedly assigned to said at least one ROM.

20. A method according to claim 16, characterized in that said copying step comprises a step of disabling a read access to that area of said first RAM which is fixedly assigned to said at least one ROM.

FIG. 1

EP 0 359 235 A2

FIG. 2

EP 0 359 235 A2

START

DESIGNATE MEMORY MAP INFORMATION IN ACCORDANCE WITH MEMORY MAP DESIGNATION ROUTINE — S2

COPY INSTRUCTION DATA PRESENT ? — S4
NO →
YES ↓

COPY IN ACCORDANCE WITH COPY ROUTINE — S6

SET AREA DATA AND DISABLE DATA IN ACCORDANCE WITH MEMORY MAP SETTING ROUTINE — S8

MW ORMR ? — S10
NO →
YES ↓

WITHIN DISABLED ADDRESS AREA ? — S12
YES →
NO ↓

GENERATE CHIP SELECT SIGNAL — S14

F I G.  3

FIG. 4A   FIG. 4B   FIG. 4C